# EUROPEAN PATENT APPLICATION

(11) **EP 4 381 928 A1**
(43) Date of publication of application: **12.06.2024**
(21) Application number: 22212123.8
(22) Date of filing: 08.12.2022
(51) Int. Cl.: A01D 34/66

(54) **MOWER WORKING DRUM**

(71) Applicant: Samasz Spolka Z Ograniczona Odpowiedzailnoscia, 16-060 Zabludow (PL)
(72) Inventor: STOLARSKI, Antoni, 16-060 Zabludów (PL); KRZYWOSZ, Pawel, 16-060 Zabludów (PL); KACZYNSKI, Szymon, 16-060 Zabludów (PL)
(74) Representative: Lampart, Jerzy

(57) **Abstract**

A mower working drum located on a cutting bar is mounted detachably to a hub and is provided at the bottom with cutting knives in a cutting disc, and above the disc is provided axially a drum sidewall (8). On the drum wall are provided ejecting elements. From the top, the drum has a cover (12) provided detachably. Under the cover and between the ejecting elements (10) mounted on the drum are limiting blades (11), and in the bottom section of the drum, in a counter-clockwise direction to the limiting blades mounted are lifting blades (9).

## Description

The present invention relates to a working drum equipped with elements generating eject effect of cut crop by feeding, conveying and disposing thereof in a narrower swath, used mainly in mowing machines.

Constructions are known wherein a mower comprises a cutting bar extending transversely towards the direction of travel, whereon discs are provided, as well as working drums capable of rotating around own axis. To said working elements, at end points, mounted are at least 2 cutting blades rotating around the axis of the mounting element. In the majority of solutions, the working drums are located in the end position of the cutting bar. The drums include a cutting disc whereto mounted is a sheet metal element of an approximately cylindrical or conical shape that forms a sidewall of the drum. The object of such constructed drum is to drive the cut plants to the inner zone of the cutting bar. Due to the shape of the metal sheet element and no additional elements supporting the operation, the situations occur where the cut plants wrap up on the drum.

A solution is known from patent GB1117035 wherein a trapezoidal drum narrows downwards towards the blades. The drum may have ribs extending in an axial direction. The drum may have a circular horizontal cross-section. Patent GB1537381 relates to a rotary mower where to the working drums are mounted crop-guiding bars. The crop-guiding bar may be fastened by means of rivets. In the said invention, there are no limiting elements or lifting elements. Patent CA898097 presents a working drum that works by way of a separator and is used for harvesting grains.

It is known from patent US5768865 a cutting element, where the metal sheet element is presented that is mounted to the cutting disc, and when coupled they form a working drum. The metal sheet element is approximately cylindrical in shape and has ejecting elements. In the end positions of the metal sheet element are mounted supporting elements ejecting cut plants clockwise towards the rotation direction of the drums. The drum rotates around own axis and transports not only cut plants but also undesired impurities.

It is known from patent CA2559217 a construction wherein the extreme working drums do not constitute an integral part of the cutting bar. The metal sheet element is fastened to the cutting disc by means of bolts. The shape thereof is similar to a hourglass, along the circumference thereof are mounted respectively profiled elements similar to cylinders in shape. It is a frame construction wherein there are no element preventing the cut grass from flowing above the drum.

Another example of state of the art is patent CN103109646 that presents a conical drum, and along the circumference thereof are fastened by means of the bolts material guiding elements. In the top section of the drum is fastened a cover that prevents extraneous matter from entering the drum interior. Due to the construction of the cover, which diameter is lesser than lesser diameter of the cone, the cut plants may wrap on the drum. The bolted guiding elements may not be sufficient and may not generate the crop lifting effect.

The defect of the presented solutions is wrapping the plants on the extreme working drums, too low flow of the cut material, excessive accumulation of the cut mass, particularly in the end points of the cutting bar and significant impurities in the cut feed. A major disadvantage of the presented solutions is the situation where the cut plants pass over the drum disrupting the cutting process and transfer of the material towards the desired direction. Further, the presented problems generate large, irregular overloads on the working drums that results in the higher risk of failure, poorer quality of the feed and significantly lower performance of the machine.

The object of the present invention is to develop a working drum that provides for lifting the cut plants over the cutting bar and ejecting clockwise towards the drum rotation, eliminating the plant wrapping and reducing impurities in the cut material. It will provide greater performance, increase flow of the cut material and significantly reduce overload, which will result in decreased breakdowns. The properly designed working drum will significantly improve purity and accelerate the plant drying process.

The subject of the present invention is a mower working drum provided on a cutting bar, detachably mounted with a hub. The drum contains at the bottom mounted cutting knives in a cutting disc and above the disc is axially mounted sidewall approximately cylindrical or conical in shape and on the outer side surface, along the slant height of the cone are mounted ejecting elements. The drum from the top is provided with the cover mounted detachably. Also in the top section of the drum under the cover and between the ejecting elements are mounted to the drum helicoidal or approximately helical (spiral) in shape limiting blades. In the bottom section of the drum counter-clockwise to the limiting blades are similarly mounted lifting blades. The limiting blades and lifting blades are mounted permanently at the outer surface of the drum. The shape of the limiting blade is similar or equal the shape of the lifting blade. The diameter of the cover is similar or equal the lesser diameter of the drum sidewall.

The working drum contains mounted at the bottom working elements. Depending on the direction of the drum rotation, there are left-hand or right-hand drums. The right-hand drum has the operating elements mounted such that the plants are lifted and conveyed clockwise towards the drum rotation direction. The left-hand drum is of a similar structure wherein the operating elements are mounted such that the plants are lifted and conveyed clockwise towards the drum rotation direction. The adjoining blade elements, which are arranged angularly and at respective heights provide a whirl of air that advantageously affects the flow of the cut material such that the material is lifted and then ejected clockwise towards the drum rotation direction. To prevent excessive lifting or wrapping of the plants the limiting blades are provided.

The advantage of the working drum due to lifting of the cut plants is a faster drying process and the ability to obtain a desired width of the swath. The applied lifting and ejecting elements for the cut material provide for less resistance on the edge of the cutting knife, which advantageously affects the cut quality and ensure the lack of disruption in the flow of the cut material. Properly formed shape of the drum increases the machine efficiency and crop purity. The working elements mounted onto the working drum reduce overloading and secure proper flow of the plants. The drum construction according to the present invention provides improved flow of the green mass compared with the state of the art constructions.

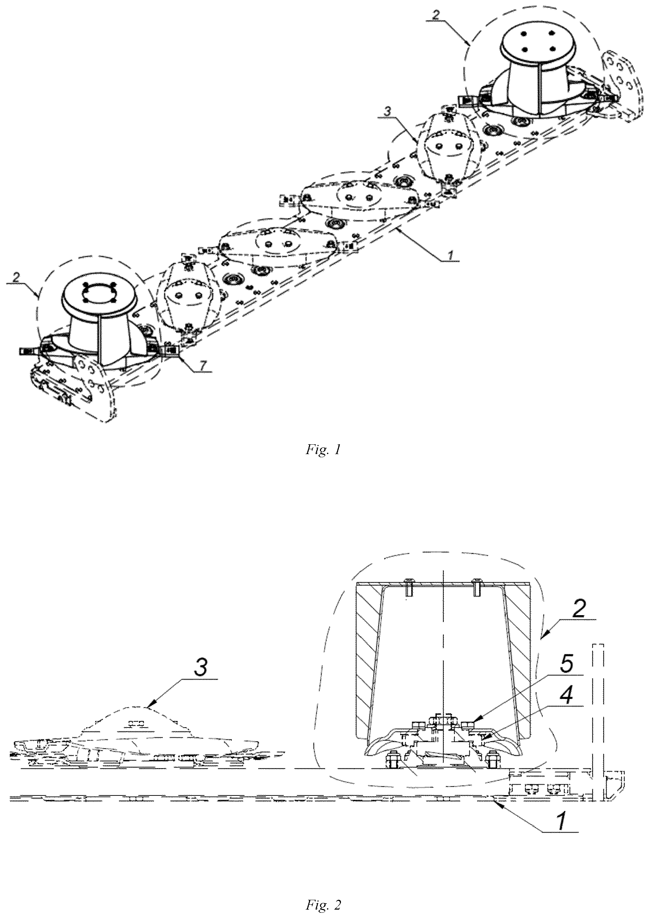

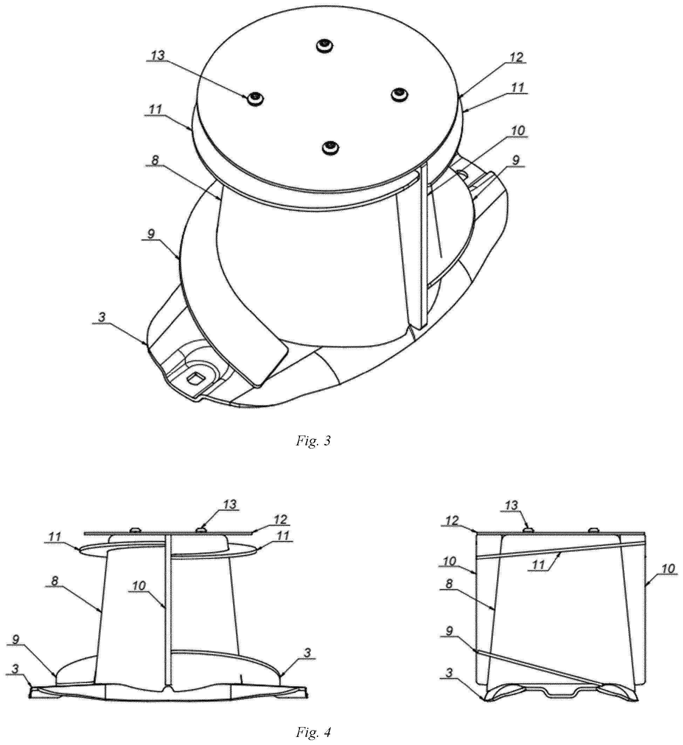

The present invention is shown in the embodiment in the drawing where Fig. 1 - Fig. 2 illustrates the working drum mounted on the cutting bar. The construction in details and arrangement of particular elements of the working drum is presented in Fig. 3 - Fig. 4.

A working drum 2 may be located at both ends of a cutting bar 1. The drum is mounted detachably to a hub 4 by means of a coupling element 5. Cutting discs 3 and the working drums 2 may rotate around own axis. At end points of a cutting disc 3, as well as of the drum 2, mounted are cutting knives 7. The working drum 2 contains the cutting disc 3 where mounted axially in relation to the vertical plane is a sidewall of the drum in a form of a metal sheet element 8 approximately cylindrical or conical in shape. Along the drum envelop, to the sidewall 8 from the outside, mounted are blades 9 lifting the cut material. The lifting blades are mounted tangentially with the edge to the surface of the cutting disc 3 and angularly in relation to the horizontal plane of the cutting disc 3. At the ends of the blades 9, in the higher position, are mounted ejecting elements 10. The ejecting elements by the lesser surface are mounted tangentially to the drum (to the horizontal line - slant height of the sidewall 8 of the drum) and parallel by the larger surface to the vertical plane of the cutting disc 3 extending along the shorter side. In the top section of the sidewall 8 are provided limiting blades 11. The limiting blades are directed counter-clockwise towards the lifting blades 9 and adjoining by the lesser surfaces thereof with the surfaces of the ejecting elements 10 in the points of largest width thereof. Both blades are mounted helicoidally, that means, along the helix and transversely to the slant height of the drum, that may be variable, mounted at different angular position in relation to the slant height of the drum. Both blades are coupled permanently with the surface of the sidewall 8 of the drum in the upper and lower section thereof, angularly in relation to the horizontal plane of the cutting disc 3. Both blades may be of a variable shape, that means, thickness, width, length, and provided with additional projections on the entire surface or only locally at the beginning, middle or end. The surface of the lifting blade 9 may be larger, lesser or equal the surface of the limiting blade 11. The said characteristics are determined depending on the drum rotation speed and properties and type of the harvested crop. Both the lifting blade 9 and limiting blade 11 may form on the sidewall 8 a shape of a helix of a irregular or regular pitch. The arrangement of the lifting blade 9 or limiting blade 11 on the surface of the sidewall 8 of the drum generates local overpressure or underpressure zones that help direct the material clockwise towards the drum rotation direction. The air movement force or zone may be controlled by adding openings on the larger surface of the lifting blade 9 or limiting blade 11. From the top to the front of the sidewall 8 of the drum a cover 12 is mounted by means of detachable elements 13. The role of the lid is to cover the mounting elements 5 of the working drum to the hub 4 and to eliminate entering the undesirable objects both the interior of the drum and over the drum.

The working drum is mounted by means of bolts to the hub 4 integrated with the cutting bar 1. When operating, both cutting discs and working drums rotate around the own vertical axis in relation to the upper surface of the cutting bar. In the drum rotation direction, the cutting crop is driven onto the upper surface of the lifting blade 9 where the passage direction is formed by the shape thereof. When the cut crop reaches the upper position at the lifting blade 9 the clash with the ejecting element 10 occurs resulting in the green mass moved clockwise towards the drum rotating direction. When the cut plants are high, the volume of the green mass increases. The limiting blades 11 prevent the plants from wrapping on the mowing drum and block undesirable flow of plants over the drum preventing from further blocking thereof against the arm of the machine. In still air, a linear movement of the cutting bar and rotating movement around own axis of both cutting discs and working drums, due to properly mounted blades, result in aggregated whirl of air. This is the case where more air is generated than supplied. Such a situation may easily secure the appropriate flow direction of the cut plants. By increasing the linear speed of the cutting bar, the whirl of air grows, leading to more efficient ejection of the cut material.

## Claims

1. A mower working drum mounted detachably on a cutting bar to a hub and provided at the bottom with cutting knives in a cutting disc, and above the disc is provided axially a drum sidewall, and on the outer surface thereof are provided ejecting elements, and from the top the drum is provided with a detachable cover, **characterized in that** in the upper section of the drum under the cover (12) and between the ejecting elements (10) mounted on the drum sidewall (8) from outside is at least one limiting blade (11) and in the bottom section of the drum in a counter-clockwise direction to the limiting blade is mounted at least one lifting blade (9).

2. The drum according to claim 1, **characterized in that** the shape of the limiting blade (11) is similar or equal to the shape of the lifting blade (9).

3. The drum according to claim 1, **characterized in that** the position of the limiting blade and lifting blade on the plane of the drum sidewall (8) is approximately helicoidal in relation to the rotation axis of the cutting disc (3).

4. The drum according to claim 1, **characterized in that** the diameter of the cover (12) is similar or equal to the lesser diameter of the drum sidewall (8).
